# EUROPEAN PATENT APPLICATION

(11) **EP 3 683 044 A1**
(43) Date of publication of application: **22.07.2020**
(21) Application number: 19382037.0
(22) Date of filing: 18.01.2019
(51) Int. Cl.: B32B 5/02, B32B 7/12, B32B 25/00, B32B 25/06, B32B 25/10, B32B 27/10, B32B 27/12, B32B 29/00, B60J 11/08, B60J 1/20

(54) **EXTERIOR PROTECTOR FOR SLIDING SURFACES**

(71) Applicant: Laystil, S.A., 08630 Abrera (ES)
(72) Inventor: MARÍN LÓPEZ, RAFAEL, 08630 ABRERA (ES)
(74) Representative: Manresa Val, Manuel

(57) **Abstract**

Comprising a first laminar body (2), made of nonwoven fabric or cellulose, characterized in that it comprises a second laminar body (3), made of a rubbery, non-slip polymer, such that said second laminar body being attached to the first laminar body (2) directly or indirectly, by means of a glue (4) or by direct co-extrusion.

## Description

An exterior protector for sliding surfaces.

An exterior protector for sliding surfaces, of the type comprising a first laminar body made of nonwoven fabric or cellulose, characterized in that it comprises a second laminar body, made of a rubbery, non-slip polymer such that said second laminar body being directly or indirectly attached to the first laminar body by means of glue or by direct co-extrusion.

### BACKGROUND OF THE INVENTION

Different patents and utility models are known in the state of the art concerning protectors for covering and shielding sliding surfaces.

One of them is the Spanish Utility Model N° ES0134741, "ICE PROTECTIVE COVER FOR CAR WINDSHIELDS", from the year 1967, now in the public domain, in the name of Carmen MOROS DE DIEGO, which refers to a protective cover to counter ice on car windshields, characterized in that it is made of a flexible plastic sheet, to which a number of suction cups are attached, arranged preferably near the four angles or the contour of the sheet, in such a manner that when the cover is placed on the windshield, the suction cups attach thereto.

Also known is the Spanish Utility Model Nº ES1061907 "PROTECTIVE DEVICE FOR AUTOMOBILES", from the year 2006, in the name THE CLIPY COMPANY LLC, which refers to a Protection Device for motor vehicles, aimed at protecting the windshield or any other window glass of motor vehicles from accumulated snow or from the formation of ice layers during the winter season, providing in addition protection from the entry of the sun rays inside the vehicle, similar to the sun shades that are placed inside the vehicle, characterized by its comprising a flat body of an approximately elongated shape, round corners and dimensions similar to the typical dimensions of a vehicle's windshield, preferably made of an opaque, lightweight material, waterproof, resistant and flexible, whose upper surface, by incorporating graphic signs or alphanumeric signs, can be used as an advertising support; said body has affixing means that allow placing the device in a stable and safe manner on the front windshield of the vehicle, and optionally, by adequate adaptation of the dimensions and shape thereof, on any glass windows.

State of the art is Spanish Utility Model Nº ES1000617, "SUNSHADE FOR MOTOR VEHICLES", from 1986, presently in the public domain, in the name of Rafael BROTONS DE LA NUÑEZ, which describes a sunshade for motor vehicles, essentially characterized by its consisting of a couple of short side arms intended to be attached by means of staples or by any other conventional means to the windshield of the vehicle, preferably in the middle area of its roof, a pair of transverse axes being placed between said arms, on each of which there is a self-winding drum, and on said drum a canvas strip or any other suitable covering material, so that such strips tend, by the very structuring of the corresponding drums, to maintain a situation of maximum winding upon the same, and against such self-winding means the said strips are extensible, one strip over the front half of the vehicle and the other over the rear half, respectively covering the roof, the rear windshield and the rear hood; such strips particularly characterized by their being provided, on their free edge, with rubber rings, hooks or any other suitable attachment means for attaching, when in an operating position, to any adequate place in the vehicle body, such as, for example, to the corresponding forward and rear bumper, having in addition provided that said drums for the canvas strips to self-wound, or similar, be assisted by corresponding housings, dimensionally adequate to house the scrolled strips and having relative length-wise slots through which the said strips emerge outside, all of which in such a manner that the sunshade constitutes an accessory that may be permanently kept attached to the roof of the vehicle, allowing the free movement thereof, whereas in a stationary condition the device passes to an operating condition by merely pulling both strips up to the corresponding fastening points, passing then to the stationary condition automatically by merely releasing such fastening means.

Reference is also made to Spanish Utility Model Nº ES1028806 "EXTERNAL SUNSHADE FOR MOTOR VEHICLES", from 1994, at present in the public domain as well, in the name of Marcel BONACHERA, which refers to an external sunshade for motor vehicles characterized by its consisting of a flexible laminar body having preferably a shape of a circular crown portion with shorter sides divergently inclined towards one of the two longer sides, parallel to each other, whereas the end lateral outer areas of the laminar body remain trapped by the front vehicle doors when these doors are closed and the rest of the laminar body covers the windshield.

Last, the applicant is also the owner of Spanish Utility Model N° 201330499 (ES1079220) "OUTER PROTECTIVE COVER FOR MOTOR VEHICLE WINDSHIELD, from 2013, which refers to an outer protective cover for the windshield of a vehicle, of the type comprising a laminar body having means of attachment to the vehicle, such laminar body defining a first face, facing outwards and a second face facing towards the vehicle, characterized in that said laminar body is made of a resistant, nonwoven fabric, and comprises and non-stick element applied to the second, inner, face, the dimensions of said laminar body being sufficient to cover the windshield.

### BRIEF DESCRIPTION OF THE INVENTION

The present application is framed within to the field of surface protectors with, particularly windshield sunshades and specifically those that are placed outside, or to the field of non-slip mats and all types of non-slip covers.

The closest document is Spanish Utility Model Nº 1079220, before mentioned.

In said utility model it is pointed out that problems deriving from high manufacturing costs are solved because the laminar body combines two cheap manufacturing materials, a nonwoven fabric and a non-stick material applied to the nonwoven fabric on its face facing the vehicle, providing the protector with a certain degree of elasticity and being also opaque and resistant.

At the same time, even when there may be ice or resins on the glass, this protector will not stick to the glass, avoiding the problem of separating the protector from the glass.

The problem rises at the time of arranging the protector over the front windshield glass because it may fly away, being difficult to affix and to form air pockets between the windshield glass and the protective cover.

Besides, since the front windshield has a concave configuration and a rubber band around the glass, a gap is formed where the ice and snow may penetrate.

Last, it is difficult to affix the protective cover to the windshield with the vehicle doors, since the air current blows the protector away. The solution is tying the protecting cover to the steering wheel of the vehicle, but this causes that the protector, by squeezing in order to tie it, ends up missing coverage of the glass surface, leaving areas unprotected from the action of the snow and the ice. Besides, this action wrinkles the protector, consequently diminishing its protection efficacy.

In order to solve these problems, the inventor has changed the non-stick material for a second, non-slip laminar body, which is attached to the first laminar body by means of a glue or by direct co-extrusion.

This prevents the flying away of the non-slip material when it is placed on the windshield of the vehicle, as it happened in the previous closest document.

Likewise, this model may be attached with the vehicle doors, since it will not be displaced by any slight air current that may occur, being it unnecessary to fasten it to the steering wheel of the vehicle, as there is enough adherence generated by its free ends being trapped when the vehicle doors are closed.

An object of the present invention is an external protector for sliding surfaces, of the type consisting of a first laminar body, made of nonwoven fabric or cellulose, characterized in that it comprises a second laminar body, made of a rubbery, non-slip polymer, such that said second laminar body being directly or indirectly attached to the first laminar body by means of a glue or by direct co-extrusion.

### BRIEF DESCRIPTION OF THE DRAWINGS

In order to facilitate the description of the invention, a sheet with drawings is attached, which includes a practical representation of an embodiment hereof, such drawing being a non limiting example of the present invention:

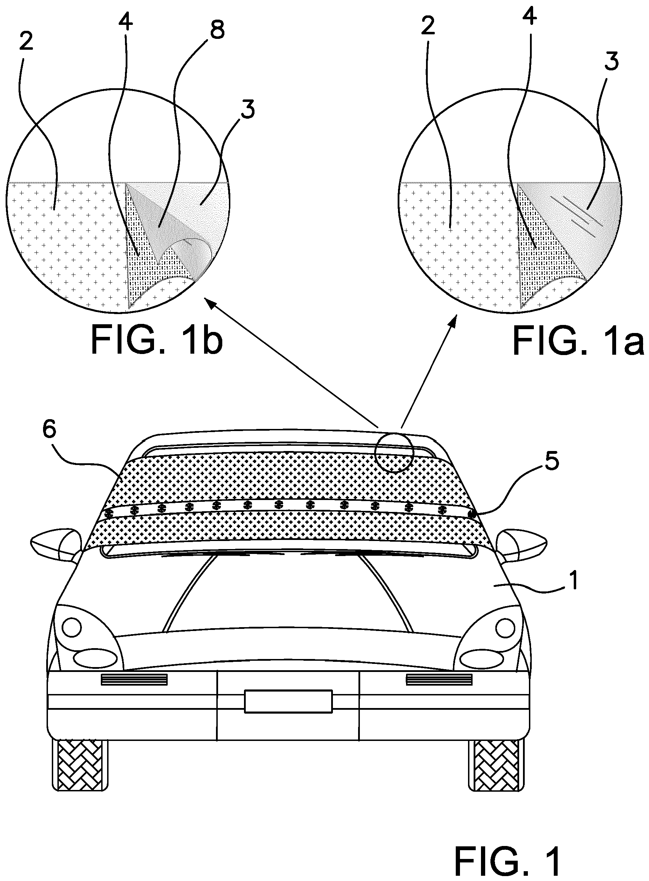

- Figure 1 is a general view of the object of the present invention,
- Figure 1a is an enlarged detail of Figure 1 with two laminar bodies, and
- Figure 1b is an enlarged detail of Figure 1 with three laminar bodies.

### SPECIFIC EMBODIMENT OF THE PRESENT INVENTION

Figure 1 shows a vehicle 1, a protector 6 and its motives 5.

Figure 1 a represents a first laminar body 2, a second laminar body 3 and a glue 4.

Last, Figure 1b illustrates the first laminar body 2, the second laminar body 3, the glue 4 and an intermediate laminar body 8.

Thus, in a specific embodiment, the external protector 6 comprises a first laminar body 2, made of nonwoven fabric (the example with cellulose is explained bellow), which stays outside the vehicle 6, on display, and may therefore have a printed advertisement, motives 5, etc. It is on this first laminar body 1 where the ice will be deposited.

The other side of protector 6 comprises a second laminar body 3, made of a rubbery, non-slip polymer. This second laminar body 3 will be spread over the windshield glass.

The second laminar body 3 is attached to the first laminar body 2, either directly or indirectly (for example, with an intermediate laminar body 8 placed between the first laminar body 2 and the second laminar body 3), by means of a glue 4 o by direct co-extrusion.

The rubbery-type co-polymer has an additional advantage in that the protector is more flexible notwithstanding the low temperatures, as shown in tests conducted at -23°C, and therefore it is more resistant to ruptures caused by the cold temperatures.

Optionally, it has been provided that when the attachment between the first laminar body 2 and the second laminar body 3 is indirect, it includes an intermediate laminar body 8 placed between the first laminar body 2 and the second laminar body 3 and attached to both. This is aimed at, for example, providing greater rigidity to the protector, etc.

The protector has been used in this embodiment as an external protector for the vehicle windshield, but could likewise be used as a tablecloth (using the second laminar body 3 as a non-slip cover with the table or the surface), as a computer pad, a kitchen mat, a bedside rug for hotels, as a cupboard lining, etc.

The protector 6 could be installed on the vehicle windshield 1, bearing in mind that the second laminar body 3, of a rubbery and non-slip type, attaches to the windshield glass and covers it completely, and the free ends thereof remain affixed when the vehicle doors are closed on such free ends, for instance. It is understood that the protective cover is large enough as to cover at least the whole vehicle windshield.

In order to fix the protector 6 in place, the protector 6 includes two ends that do not directly cover the windshield but which are intended to be blocked by the car doors when they are closed. The ends may be either strips or an exceeding part of the protector.

When the vehicle door is closed, the air current that is generated should not affect the protector, since it should be attached to the windshield by the rubbery-type polymer contained in the second laminar body 2.

The protector allows covering the whole front windshield and is attached to it without the worry that gaps in windshield rubber perimeter allow the entrance of ice or snow, since the protective cover totally adjusts to the glass, leaving no gaps.

When the snow or the ice are deposited on the first laminar body 2, the windshield glass is kept untouched by the ice or snow because all ice or snow fall on the first laminar body 2, in this case made of nonwoven fabric.

When the driver wishes to withdraw the external protector 6, they should open the vehicle 1 doors, thus releasing the free ends of the exterior protector; they should then pull one of these ends towards the opposite side of the vehicle, so that the glass is uncovered and the ice or snow that are collected on the first laminar body 2; the windshield glass is now ready for driving the vehicle 1.

The exterior protector 6 can be reused and can be scrolled and stored away, without the inconvenience that the second laminar body may stick to the first laminar body 2.

The option of using cellulose instead of nonwoven fabric is ideal, for instance, for operating theatres, where it would be possible to tread over the protector without it moving when walked over by the staff. Moreover, cellulose being a super absorbent material, the mat would absorb liquids and dirt, being discarded at the end of the surgery.

An additional advantage of the non-slip characteristic of the protective cover is to prevent that the medical staff may slip over when treading it, thus preventing falls, an extremely important characteristic when shoe wrappers, typically slippery, are used.

The present invention describes a new exterior protector for sliding surfaces. The examples mentioned herein do not limit the invention, which may therefore have different applications and/or adaptations, all of which are within the scope of the following claims.

## Claims

1. An exterior protector for sliding surfaces, of the type comprising a first laminar body (2), made of nonwoven fabric or cellulose, **characterized by** comprising a second laminar body (3), made of a rubbery, non-slip polymer, such that said second laminar body (3) being attached to the first laminar body (2) either directly or indirectly by means of a glue (4) or by direct co-extrusion.

2. A protector according to claim 1, **characterized in that** where the union between the first laminar body (2) and the second laminar body (3) is indirect, it comprises an intermediate laminar body (8) between the first laminar body (2) and the second laminar body (3), being affixed to both laminar bodies (2, 3).
